# EUROPEAN PATENT APPLICATION

(11) **EP 4 610 872 A1**
(43) Date of publication of application: **03.09.2025**
(21) Application number: 24159988.5
(22) Date of filing: 27.02.2024
(51) Int. Cl.: G06F 30/20, G06F 30/28, F24T 10/10, G06F 30/17, F28F 13/06

(54) **A COMPUTER IMPLEMENTED METHOD OF DETERMINING AT LEAST ONE CONFIGURATION PARAMETER OF A NESTED FLUID TRANSPORT PIPE**

(71) Applicant: VITO NV, 2400 Mol (BE)
(72) Inventor: ANAND, Nitish, 2400 Mol (BE)
(74) Representative: Arnold & Siedsma

(57) **Abstract**

A computer-implemented method of determining configuration parameters for a nested fluid transport pipe consisting of an inner and outer pipe. The method involves receiving design constraints for the pipe and performing a computational fluid dynamics simulation to determine a swirl number that represents the swirling motion of the fluid stream. The simulation is performed under the condition that the inner pipe is centred with respect to the outer pipe. Based on the determined swirl number, the method calculates at least one configuration parameter for the nested fluid pipe to achieve the desired level of swirl in the fluid.

## Description

### Field of Invention

The present invention relates to the field of fluid circulation systems, and more particularly to a method for determining a configuration parameter of a nested fluid transport pipe. Particular embodiments relate to a nested fluid transport pipe determined by the method.

### Background

Nested fluid transport pipes are used in a variety of industries where fluid circulation is required, such as geothermal heat extraction or more generally heat exchangers, electrolysis, oil and gas production, chemical processes, and mining. The nested pipes comprise an inner pipe nested within an outer pipe, with a gap between the two pipes that allows fluid to flow. In heat exchangers, for example, hot water is circulated through the inner pipe, while cooler water is circulated through the outer pipe, or vice versa, creating a heat exchange that can be used to generate electricity or heat buildings.

The function of nested fluid transport pipes is to provide a conduit for the flow of fluids, while also maintaining separation between the fluids and preventing contamination or mixing.

One of the challenges with nested fluid transport pipes is maintaining the position of the inner pipe within the outer pipe. This is typically achieved using spacers that extend from the outer surface of the inner pipe to the inner surface of the outer pipe, providing support and ensuring that the inner pipe remains centered within the outer pipe. However, this approach can be difficult and time-consuming, and can also cause pressure drops and other flow-related issues. Moreover, the difficulty of installing such spacers is further increased in situations where the nested pipe is to be installed in hard to reach areas, for example underground, or in cases where the outer pipe needs to be installed a priori and the inner pipe only later. Further, if the nested pipes are to be installed in an angular way, for example, when the nested pipe needs to make an angular turn, spacers are even more difficult to install.

### Summary

The object of the present invention is to determine a configuration parameter of a nested pipe such that the inner pipe, in use, substantially maintains its position with respect to the outer pipe without requiring or substantially limiting the use of spacers.

According to a first aspect there is provided a computer-implemented method of determining at least one configuration parameter of a nested fluid transport pipe. A nested fluid transport pipe comprises at least an inner pipe nested in an outer pipe, wherein, in operation, a fluid stream passes through a space between the outer pipe and the inner pipe and through the inner pipe. The method comprises the following steps:
Firstly, the method comprises receiving at least one design constraint of the nested pipe. Then, a computational fluid dynamics simulation is performed using the received design constraint to determine a swirl number that is representative of the swirling motion of the fluid stream passed through the pipe. The swirl number is a dimensionless quantity that characterizes the strength of the swirling motion in the space between the outer and inner pipe. In other words, the swirl number is representative for the strength of the swirling motion of the fluid flowing in the space between the inner and the outer pipe. The computational fluid dynamics simulation is run under at least the condition that the swirling motion of the simulated fluid stream passed through the space between the outer pipe and the inner pipe and through the inner pipe substantially centers the inner pipe with respect to the outer pipe. Finally, the method involves determining the at least one configuration parameter of the nested pipe based on the determined swirl number such that a nested pipe comprising the determined at least one configuration parameter generates the simulated swirling motion in the nested pipe in operation.

The generating of the swirling motion in the nested pipe step may be understood as inducing a swirling flow pattern in the fluid that flows through the space between the outer and pipe. The swirling flow pattern may be characterized by a tangential velocity component that is perpendicular to the axial direction of the pipe also defined as a swirl. In other words, the swirl in a nested fluid transport pipe refers to the tangential force created by the swirling motion of the fluid stream as it passes through the space between the outer and inner pipes. This swirling motion is generated by the means designed by using the configuration parameters of the nested pipe, which are determined using computational fluid dynamics simulations as described above. The swirling motion of the fluid stream creates a force that acts in the direction opposite of where the inner pipe is trying to move. For example, when the nested pipe extends in a substantially horizontal direction, the inner pipe will have a tendency to drop due to the gravitational force working on the inner pipe. This means that the space between a lower section of the inner pipe and a bottom section of the outer pipe is smaller than the space between the top section of the inner pipe and the top section of the outer pipe. The fluid moving along the top section of the inner pipe moves faster than the fluid moving along the bottom section of the inner pipe due to the swirling motion. This difference in velocity creates a difference in pressure, with lower pressure on the top side of the inner pipe and higher pressure on the bottom side of the inner pipe. This difference in pressure creates a force that acts in the direction opposite of where the inner pipe is trying to move, which helps to center the inner pipe with respect to the outer pipe. This centering of the inner pipe is a self-centering effect of the inner pipe, which is the effect of automatically centering the inner pipe with respect to the outer pipe, effectively eliminating the need for spacers to support the inner pipe. This self-centering effect simplifies the construction process of the nested pipe and increases the efficiency and performance of the system. The self-centering effect has several technical advantages. First, it substantially eliminates the need for spacers, which reduces the complexity and cost of the construction process. Second, it reduces pressure drops and other flow-related issues that can occur when using spacers, which improves the efficiency and performance of the pumping system. Third, in the example of applying the nested pipe in a heat exchange system, the self-centering effect improves heat, as the self-centering effect improves heat exchange between the fluid streams circulating through the inner and outer pipes.

Preferably, the design constraint is representative for at least one of a length of the nested pipe, a nominal diameter of the nested pipe, and a weight of the inner pipe. The length, nominal diameter, and weight of the inner pipe are all design parameters that can be taken into account when designing a nested fluid transport pipe that can generate the desired swirling motion and self-centering effect. By using said design constraints in the computational fluid dynamics simulation to determine the swirling motion, the method allows for a more precise and accurate determination of the configuration parameters of the nested fluid transport pipe, resulting in a more reliable and effective pipe.

Preferably, the computer-implemented method further comprises the use of design constraints that are representative of at least one of a fluid flow velocity, a fluid viscosity, a heat transfer rate, and a pressure drop. One advantage of this, is that it allows for a more precise and accurate determination of the configuration parameters of the nested fluid transport pipe, resulting in a more reliable and efficient system. By using the fluid flow velocity, viscosity, heat transfer rate, and pressure drop as design constraints in the computational fluid dynamics simulation, the method can generate an even more accurate and efficient nested fluid transport pipe that is optimized for a specific application. Yet another advantage is that by taking into account the fluid flow velocity, viscosity, heat transfer rate, and pressure drop, the method can optimize the configuration parameters of the nested fluid transport pipe to minimize these issues and ensure optimal performance.

Preferably, determining the at least one configuration parameter of the nested pipe based on the determined swirl number comprises the step of designing a swirl generating device, wherein the swirl generating device comprises the at least one configuration parameter such that the swirl generating device, in operation, generates the swirling motion in the nested pipe. More preferably, the swirl generating device is a vane arranged on at least one of an inner side of the outer pipe and an outer side of the inner pipe. One advantage of using vanes as the swirl generating device is that they are highly effective in steering the fluid and are easily configurable which allows for a more flexible and adaptable system design. Another advantage is that the vane configuration can be optimized for different operating conditions and process requirements, which can result in better performance and efficiency. More preferably, the at least one configuration parameter is representative for at least one of a vane height, a vane thickness, a vane angle, a vane shape such a straight vane, a helical vane, a spiral vane etc., a quantity of vanes and a vane length. It may be provided that the vane height is the distance between the vane and the inner or outer wall of the pipe, while the vane thickness is the distance between the two edges of the vane measured along the pipe wall. The vane angle is the angle between the vane and the axial direction of the pipe, and it determines the direction and intensity of the swirling motion. The vane shape can vary depending on the desired flow pattern and the nature of the fluid being transported. For example, a straight vane may create a uniform swirling motion, while a helical or spiral vane may create a more complex and turbulent flow pattern.

Preferably, the simulated fluid stream passed through the space between the outer pipe and the inner pipe and the fluid passed through the inner pipe have an opposite flow direction. Alternatively, the simulated fluid stream passed through the space between the outer pipe and the inner pipe and the fluid passed through the inner pipe have substantially the same flow direction.

According to a second aspect, a nested fluid transport pipe comprising at least an inner pipe nested in an outer pipe, wherein, in operation, a fluid stream is passed through a space between the outer pipe and the inner pipe and through the inner pipe, wherein the nested pipe comprises at least one configuration parameter determined according to the method as described here above, such that, in operation, the nested pipe generates a swirling motion with the fluid stream passed through the nested pipe to substantially centre the inner pipe with respect to the outer pipe.

It will be understood by the skilled person that the features and advantages disclosed hereinabove with respect to various embodiments of the method may also apply, mutatis mutandis, to various embodiments of the nested fluid transport pipe.

Preferably, the nested pipe further comprises a swirl generating device configured to generate the swirling motion in the nested pipe, wherein the swirl generating device is designed using the determined at least one configuration parameter of the nested pipe based on the determined swirl number.

Preferably, the swirl generating device is configured to generate a swirl-induced force on the inner pipe using the fluid stream such that the inner pipe is centred with respect to the outer pipe. In particular on the outer surface of the inner pipe. It will be clear that the swirl-induced force is generated to work on an outer surface of the inner pipe.

Preferably, the inner pipe is, in operation, substantially freely suspended in the outer pipe or at least freely suspended at one end.

Preferably, the swirl generating device is a vane arranged on at least one of an inner side of the outer pipe and an outer side of the inner pipe. Preferably, in operation, a central axis of the inner pipe lies within 15% of a central axis of the outer pipe, preferably within 10%, more preferably within 5%.

According to a further aspect a geothermal energy system comprising a nested fluid transport pipe as described here above is provided.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, mutatis mutandis, to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, mutatis mutandis, to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, mutatis mutandis, to embodiments of the method for downloading.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figures 1A-1B schematically illustrate a nested pipe where the inner pipe is centred with respect to the outer pipe;
Figures 2A-2B schematically illustrate a nested pipe where the inner pipe is not centred with respect to the outer pipe;
Figure 3 schematically illustrates a flowchart of a computer-implemented method of determining at least one configuration parameter of a nested fluid transport pipe, including, in this example, the nested fluid transport pipe such as that shown in Figures 2A and 2B;
Figure 4 schematically illustrates a flowchart of an exemplary embodiment of the method using further design constraints;
Figure 5 schematically illustrates a perspective view of a nested pipe designed using the computer-implemented method according to an exemplary embodiment.

### Description of embodiments

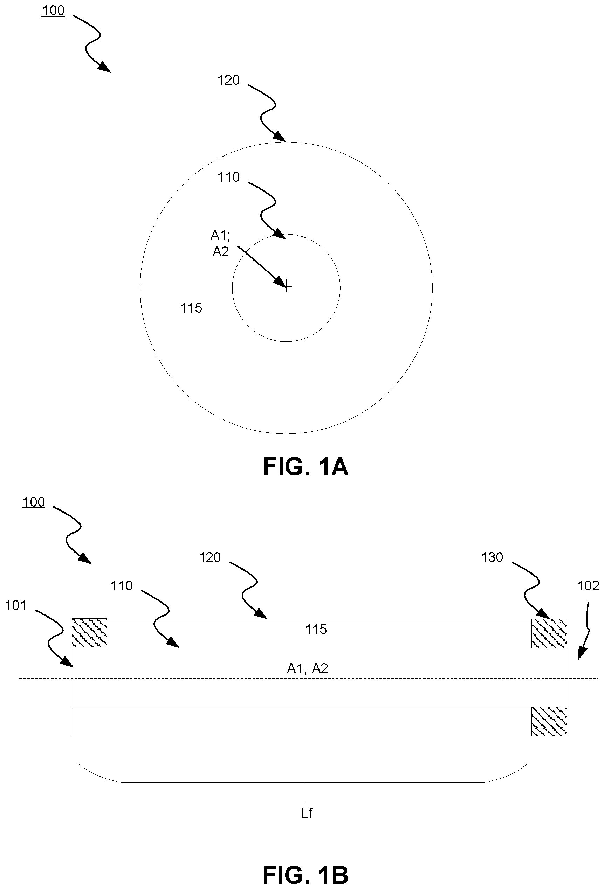

Figure 1A schematically illustrates a cross section of a nested pipe 100. The nested pipe 100 comprise an inner pipe 110 nested within an outer pipe 120, with a gap 115 between the two pipes that allows fluid to circulate. Nested fluid transport pipes are widely used in various industries where fluid circulation is required. One such application is in geothermal heat extraction, where hot water is circulated through the inner pipe 110 while cooler water 120 is circulated through the outer pipe 120, or vice versa. This creates a heat exchange that can be used to generate electricity or heat buildings. In addition to this, nested pipes are used in heating, ventilation, and air conditioning (HVAC) systems to circulate hot or cold water or other fluids to regulate the temperature of a building. Other uses include more generic heat exchangers. Chemical processing plants are another example where nested pipes 100 can be used. In chemical processing plants nested pipes 100 are used to circulate different types of fluids, such as acids or solvents, to facilitate chemical reactions or cooling processes. Nested fluid transport pipes are also used in the oil and gas industry. In this industry, nested pipes 100 are used to circulate different types of fluids, such as drilling mud, oil, and gas, to facilitate the extraction and production of these resources. For example, in drilling operations, drilling mud is circulated through the inner pipe 110 to cool and lubricate the drill bit, while the outer pipe 120 is used to circulate drilling fluid to maintain the pressure and stability of the well.

Figure 1B shows a side view of a section of the nested pipe 100 of figure 1A, specifically along a longitudinal axis A thereof. Figure 1A only shows a single axis because the longitudinal axis of the inner and outer pipe 120 are aligned as will be elaborated below. Figure 1B further shows that the nested pipe 100 comprises a first end 101 and a second end 102 between which a pipe wall of the nested pipe extends to delimit a pipe channel. It will be clear that the inner pipe 110 as well as the outer pipe 120 comprise a pipe wall and that the inner pipe 110 and the outer pipe 120 comprise a first and second end, respectively. Figure 1B shows that the ends of the inner and outer pipe 120s are aligned, but it will be clear that the ends of the inner pipe 110 and outer pipe 120 do not need to be aligned. The inner pipe 110 and outer pipe 120 can have different lengths and terminate at different locations. The length of the inner pipe 110 and outer pipe 120 may vary depending on the specific application and requirements of the fluid circulation system.

Figure 1B further shows that, near the second end 102, the nested pipe 100 comprises a support structure 130 which connects the outer pipe 120 to the inner pipe 110. The support structure 130 can also be referred to as a spacer. The support structure 130 maintains the position of the inner pipe 110 such that the inner pipe 110 is centred with respected to the outer pipe 120. In the context of nested fluid transport pipes, when the inner pipe 110 is centred with respect to the outer pipe 120, it means that the inner pipe 110 is positioned in the middle of the outer pipe 120, or, put differently, that the longitudinal axis A1 of the inner pipe 110 and the longitudinal axis A2 of the outer pipe 120 are aligned, as shown in figures 1A and 1B. This ensures that there is an equal gap between the inner and outer pipes 110, 120 on all sides, which allows for the even circulation of fluid through the gap between the pipes. In order to ensure that the inner pipe 110 is always centred with respect to the outer pipe 120, currently, support structures 130 must be provided to hold the pipes in place and prevent them from shifting or moving away from their centred position. These support structures 130 can be in the form of braces, clamps, or other devices that secure the pipes in place. The support structures 130 that are used to hold the inner pipe 110 centred with respect to the outer pipe 120 can cause pressure drops and other inefficiencies in a fluid circulation system. This is because the support structures 130 can create obstructions in the flow of fluid through the gap between the pipes 110, 120, which can cause pressure drops and reduce the efficiency of the system. In addition, the support structures 130 can increase the resistance to fluid flow, which can require higher pumping pressures to maintain the desired flow rate. This can result in higher energy consumption and operating costs for the fluid circulation system. Moreover, installing these support structures can be challenging, especially in situations where the nested pipe is to be installed underground. In such cases, it may be difficult to access the pipes and install the support structures 130, which can increase the cost and complexity of the installation process.

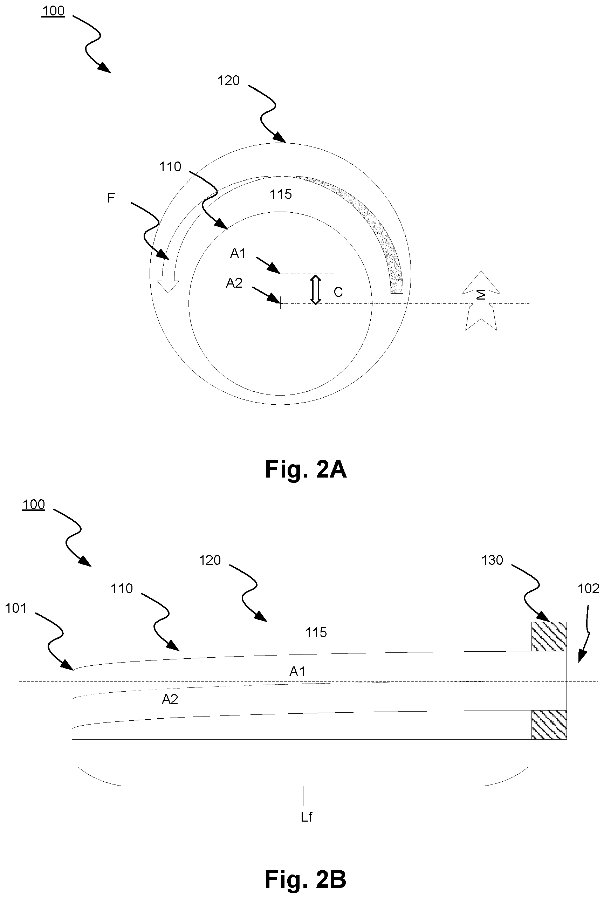

Figures 2A and 2B illustrate the effect of a nested pipe 100 where the inner pipe 110 is only supported at one end 102 thereof. In such a case the nested pipe 100 comprises an inner pipe 110 with a free-standing length Lf. A free-standing length refers to the length of the inner pipe 110 that is not supported at its ends or along its length. In other words, it is a length of the inner pipe 110 that is unsupported and can bend or deflect under its own weight or external forces. In the case where the inner pipe 110 is at least partially unsupported, i.e. illustrated case of figures 2A and 2B, the inner pipe 110 has the tendency to bias towards the inner wall of the outer pipe 120, typically due to gravitational influence. This causes the longitudinal axis A1, A2 of the inner and outer pipe 120 to be unaligned. Where figures 1A and 1B illustrate a situation where a longitudinal axis A2 of the inner pipe 110 is aligned with the longitudinal axis A1 of the outer pipe 120, this situation is defined as a situation where 0% eccentricity is present between the inner and outer pipe 120. Figures 2A and 2B illustrate a situation where the eccentricity between the inner pipe 110 and the outer pipe 120 is larger than 0%. Figure 2A, for example, illustrates the difference in alignment of the longitudinal axis A1 of the outer pipe 120 and the longitudinal axis A2 of the inner pipe 110. Figure 2B illustrates how this difference alignment, or eccentricity manifests in reality. When an axis A1 is eccentric with respect to another axis A2, it means that the two axes are not perfectly aligned, and one of them is shifted or offset from the other, in the illustrated case A2 is offset with respect to A1. This means that there is a measurable distance between the two axis A1, A2. The eccentricity is expressed as a percentage, where 0% refers to a situation wherein a distance C between the longitudinal axis A1 of the inner pipe 110 and the longitudinal axis A2 of the outer pipe 120 is zero. 100% eccentricity is a situation where the distance C between the longitudinal axis A1 of the inner pipe 110 and the longitudinal axis A2 of the outer pipe 120 is at its maximum. This maximum is dependent on the dimensions of the inner and outer pipe 120. The eccentricity can also change along a length of the nested pipe 100, for example, the eccentricity near the second end 102, where the support structure 130 is situated can be small with respect to the eccentricity near the first, unsupported, end 101.

In the context of heat exchange applications, when the eccentricity is zero, i.e. when the inner pipe 110 is perfectly centred within the outer pipe 120, this results in the most efficient heat transfer between the two tubes because the so called Nusselt number is highest. The Nusselt number is a dimensionless number used to describe the convective heat transfer between a fluid and a solid surface. It is defined as the ratio of convective to conductive heat transfer, and it depends on various factors such as fluid properties, flow rate, and surface geometry. In the case of nested pipes, the Nusselt number is directly proportional to the heat transfer rate. When the eccentricity is zero, the flow of fluid is symmetrical and uniform, resulting in a higher convective heat transfer coefficient, which in turn leads to a higher Nusselt number. This means that more heat is transferred from the hot fluid to the cold fluid, resulting in a higher overall heat transfer rate.

However, if there are no support structures 130 to centre the pipes, the inner pipe 110 may have an eccentricity greater than zero with respect to the outer pipe 120, meaning that it is not perfectly centred within the outer pipe 120. This can lead to decreased heat transfer efficiency due to the formation of eddies and turbulence in the fluid flow, which can reduce the convective heat transfer coefficient. Based on the above, it is clear that it is a great advantage to have an at least partially unsupported centred inner pipe 110.

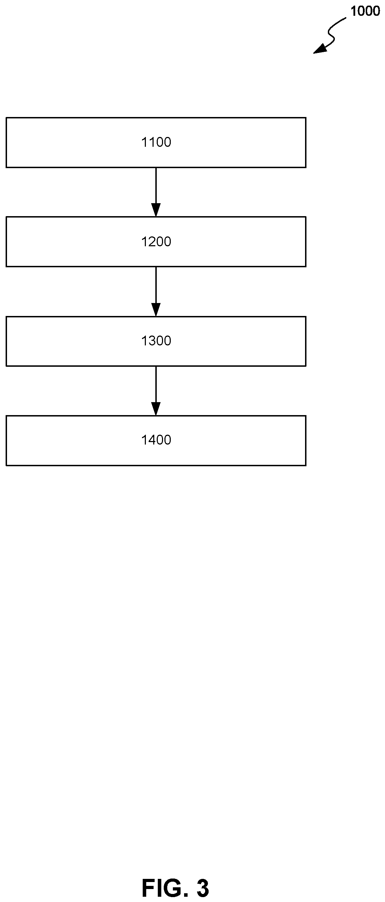

This can be achieved by a fluid F passing through the space 115. The fluid can generate a lift force M on the inner pipe 110 which counter-acts the bias of the inner pipe 110. However, the fluid F passing through the space 115 must have a swirling motion to generate the lift force. This swirling motion of the fluid M is shown in figure 2A. The generation of the swirling motion can be achieved in a plurality of ways and the quantification of how much the fluid must swirl is a challenge. For this reason a method was developed to determine a configuration parameter of a nested pipe such that the nested pipe, in use, generates a swirling motion using the fluid passing through the pipe which centres the inner pipe 110 with respect to the outer pipe 120 while in use. The method is schematically illustrated in figure 3.

Moreover, even though the nested pipe 100 is oriented in a substantially horizontal direction in figures 1A, 1B, 2A, and 2B, the eccentricity issues exist in a similar way with nested pipes which are slanted or oriented in a vertical direction. In such cases, the above explained centring of the inner pipe using a swirling motion of the fluid passing through the space can be achieved in a similar manner.

Figure 3 schematically illustrates a computer-implemented method 1000 of determining at least one configuration parameter 1400 of a nested fluid transport pipe 100. The method is computer-implemented. The method involves analysing various factors related to the nested pipe, such as the geometry, fluid properties, and operating conditions, in order to determine the configuration parameter that will result in the nested pipe generating a swirling motion in the fluid passing through said pipe to generate the lift force that substantially centres the inner pipe 110 with respect to the outer pipe 120. The configuration parameter refers to the specific characteristics or features of the nested pipe that can be designed, adjusted or optimized to improve its performance in generating said swirling motion. The nested fluid transport pipe is a pipe as shown in figures 2A and 2B and comprises at least an inner pipe 110 nested in an outer pipe 120, wherein, in operation, a fluid stream passes through the space 115 between the outer pipe 120 and the inner pipe 110 and through the inner pipe 110.

The method 1000 comprises receiving at least one design constraint 1100 of the nested pipe 100. The design constraint refers to a specific requirement or limitation that must be considered when designing the nested pipe and can be related to factors such as heat transfer rate, fluid properties, operating conditions, space limitations, or material selection. The method 1000 may involve receiving the design constraint from a variety of sources, such as the customer or end-user, the engineering team responsible for designing the nested pipe, or other stakeholders involved in the project. The design constraint is preferably representative for at least one of a length of the nested pipe 100, a nominal diameter of the inner pipe 110, and a weight of the inner pipe 110. The length, nominal diameter, and weight of the inner pipe 110 are all design parameters that can be taken into account when designing a nested fluid transport pipe that can generate the desired swirling motion and self-centring effect. By using said design constraints in the computational fluid dynamics simulation 1200 to determine the swirling motion, the method allows for a more precise and accurate determination of the configuration parameters of the nested fluid transport pipe, resulting in a more reliable and effective pipe. More preferably, the computer-implemented method 1000 further comprises the use of design constraints that are representative of at least one of a fluid flow velocity, a fluid viscosity, a heat transfer rate, and a pressure drop. One advantage of this, is that it allows for a more precise and accurate determination of the configuration parameters of the nested fluid transport pipe, resulting in a more reliable and efficient system. By using the fluid flow velocity, viscosity, heat transfer rate, and pressure drop as design constraints in the computational fluid dynamics simulation 1200, the method 1000 can generate an even more accurate and efficient nested fluid transport pipe that is further optimized for a specific application. It will be clear that although at least one design constraint must be used in the method 1000, a plurality of design constraints may be used. The choice of design constraints will depend on the specific requirements and limitations of the application or system being designed. In practice, there may be multiple design constraints that need to be considered in order to achieve the desired performance, functionality, and safety of the pipe. For example, in the case of a heat transport pipe, the design constraints may include factors such as the required heat transfer rate, fluid properties, and operating conditions. In some cases, conflicting design constraints may need to be balanced or prioritized in order to achieve the best overall design. For example, a design constraint related to cost may conflict with a design constraint related to performance. In such cases, trade-offs may need to be made in order to achieve a balance between the different design constraints.

Using the received at least one design constraint, a computational fluid dynamics simulation 1200 is performed. A computational fluid dynamics, CFD, simulation 1200 is a computer-based numerical analysis technique used to study fluid flow and heat transfer phenomena. It involves the use of mathematical models and algorithms to simulate the behaviour of fluids under various conditions, such as the design constraint of the pipe. In a CFD simulation, the fluid flow is divided into small, discrete elements or cells, and the equations of fluid motion and energy transfer are solved for each of these cells. The solution of these equations provides information on fluid velocity, pressure, temperature, and other parameters, which can be used to study the behaviour of the fluid and its interaction with solid surfaces. The CFD 1200 simulation is particularly beneficial in the situations where experimental testing is difficult or impractical. The computational fluid dynamics simulation 1200 is performed to determine a swirl number 1300 that is representative of the swirling motion of the fluid stream passed through the pipe. The swirl number 1300 is a dimensionless quantity that characterizes the strength of the swirling motion in the pipe. The swirl number 1300 is defined as the ratio of the tangential velocity of the fluid to the axial velocity of the fluid and is a measure of the degree of swirling motion in the flow. The computational fluid dynamics simulation 1200 is run under at least the condition that the swirling motion of the simulated fluid stream passed through the space 115 between the outer pipe 120 and the inner pipe 110 and through the inner pipe 110 substantially centres the inner pipe 110 with respect to the outer pipe 120. In other words, this step refers to a specific condition that is used in the CFD 1200 simulation to determine the configuration parameter of the nested pipe. In this case, the CFD 1200 simulation is run under the condition that the swirling motion of the fluid stream passing through the space 115 between the outer and inner pipes 110, 120 substantially centres the inner pipe 110 with respect to the outer pipe 120. This means that the swirling motion of the fluid generates a lift force on the inner pipe 110 that counteracts any bias or eccentricity, resulting in a more stable and efficient fluid flow. The generating of the swirling motion in the nested pipe step may be understood as inducing a swirling flow pattern in the fluid that flows through the pipe. The swirling flow pattern may be characterized by a tangential velocity component that is perpendicular to the axial direction of the pipe also defined as a swirl. In other words, the swirl in a nested fluid transport pipe refers to the tangential force created by the swirling motion of the fluid stream as it passes through the space between the outer and inner pipes 110, 120. This swirling motion is generated by the means designed by using the configuration parameters of the nested pipe, which are determined using computational fluid dynamics simulation 1200 as described above. The swirling motion of the fluid stream creates a positive force that acts in the direction opposite of where the inner pipe 110 is trying to move. Put differently, the swirling motion of the fluid stream generates a difference in pressure between the top and bottom of the inner pipe 110. The fluid moving along the top of the inner pipe 110 moves faster than the fluid moving along the bottom of the inner pipe 110 due to the swirling motion. This difference in velocity creates a difference in pressure, with lower pressure on the top side of the inner pipe 110 and higher pressure on the bottom side of the inner pipe 110. This difference in pressure creates a lift force that acts in the direction opposite of where the inner pipe 110 is trying to move, which helps to centre the inner pipe 110 with respect to the outer pipe 120. This centring of the inner pipe 110 is a self-centring effect of the inner pipe 110, which is the effect of automatically centring the inner pipe 110 with respect to the outer pipe 120, effectively eliminating the need for spacers to support the inner pipe 110. This self-centring effect simplifies the construction process of the nested pipe and increases the efficiency and performance of the system. The self-centring effect has several technical advantages. First, it substantially eliminates the need for spacers, which reduces the complexity and cost of the construction process. Second, it reduces pressure drops and other flow-related issues that can occur when using spacers, which improves the efficiency and performance of the pumping system. Third, in the example of applying the nested pipe in a heat exchange system, the self-centring effect improves heat exchange in geothermal heat extraction, as the self-centring effect improves heat exchange between the fluid streams circulating through the inner and outer pipes 110, 120.

Finally, the method 1000 involves determining the at least one configuration parameter 1400 of the nested pipe based on the determined swirl number 1300 such that a nested pipe comprising the determined at least one configuration parameter generates the simulated swirling motion in the nested pipe 100 in operation. In this step, the at least one configuration parameter 1400 for the nested pipe 100 is determined based on the swirl number 1300 that was calculated using the CFD 1200 simulation. The configuration parameters are thus chosen to ensure that the nested pipe 100 generates the simulated swirling motion in operation.

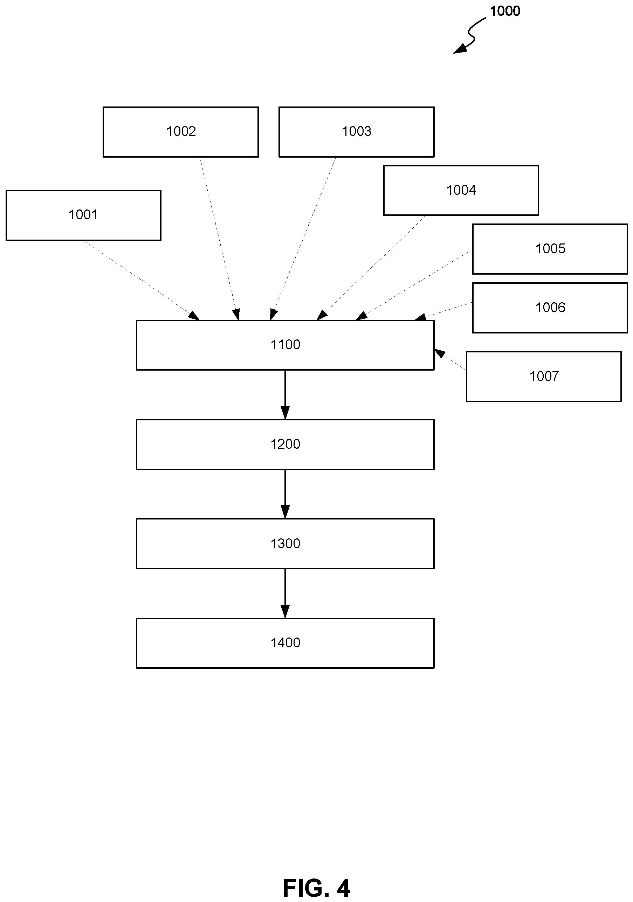

Figure 4 schematically illustrates a flowchart of an exemplary embodiment of the method 1000 using further design constraints. In figure 4 it is shown that the design constraint can be representative for at least one of a length of the inner pipe 1001 , a nominal diameter 1002 of the nested pipe, and a weight 1003 of the inner pipe. The weight 1003 of the inner pipe is a design constraint, as it can affect the lift force generated by the swirling motion of the fluid, as well as the mechanical stresses on the pipes. As the weight 1003 of the inner pipe increases, a higher swirl number is required to generate the lift force needed to centre the pipe within the outer pipe. This is because the lift force generated by the swirling motion of the fluid is proportional to the velocity and spin rate of the fluid, which is in turn affected by the swirl number. However, it is important to note that higher swirl also leads to higher pressure drop and higher heat transfer, as well as a higher self-centring effect. This means that there may be trade-offs between the desired level of swirl and the desired level of pressure drop, heat transfer, and self-centring. The optimal design of the nested pipe will depend on the specific requirements and limitations of the application or system being designed and may involve balancing these trade-offs to achieve an optimal design. The weight of the inner pipe is affected by various factors, including the length and nominal diameter of the nested pipe. The length 1001 of the nested pipe is a design constraint that can affect the weight of the inner pipe, as well as the overall size and geometry of the nested pipe. In particular the length 1001 of the inner pipe is to be considered as a design constraint, and more in particular, an unsupported length Lf of the inner pipe 110, as shown in figure 2B. The nominal diameter 1002 of the nested pipe Is also a design constraint that can affect the weight of the inner pipe. A larger diameter pipe will typically result in a heavier inner pipe, as more material is required to construct the pipe. Moreover, the relationship between swirl and weight in the design of the nested pipe can be affected by various factors, including flow velocity, weight of the pipe, swirl, and viscosity. Therefore, a fluid flow velocity 1004, a fluid viscosity 1005, a heat transfer rate 1006 and a pressure drop 1007 are also design constraints which may be considered in the determining the at least one configuration parameter of the nested pipe. As mentioned earlier, high flow velocity 1004 can generate more lift, which can support more weight of the inner pipe. The lift generated is proportional to the velocity and spin rate of the fluid. The viscosity 1005 of the fluid is yet another factor that can affect the lift generation, as well as the speed at which the swirl is generated in the flow. In general, higher viscosity 1005 will lead to higher lift generation, but may also affect the speed at which the swirl is generated. One advantage of these additional design constraints is that these design constraints allow for a more precise and accurate determination of the configuration parameters of the nested fluid transport pipe, resulting in a more reliable and efficient system. In other words, by using the fluid flow velocity, viscosity, heat transfer rate, and pressure drop as design constraints in the computational fluid dynamics simulation 1200, the method can generate an even more accurate and efficient nested fluid transport pipe that is optimized for a specific application.

The step of determining the at least one configuration parameter 1400 of the nested pipe based on the determined swirl number 1300, preferably comprises the step of designing a swirl generating device. The swirl generating device comprises the at least one configuration parameter such that the swirl generating device, in operation, generates the swirling motion, using the fluid, in the nested pipe. To elaborate, the swirl generating device is designed, using the at least one configuration parameter determined based on the swirl number, to create the swirling motion in the nested pipe to achieve the desired level of swirl in the fluid flowing through the nested pipe. The swirl generating device may include features such as vanes, blades, or other flow-shaping components that are arranged to create the swirling motion. In this context, a vane is considered a swirl generating device which can interchangeably be used with technical elements such as a blade, fin, wing, rudder, foil, rib or, more generally, a protrusion shaped to guide the fluid into a swirling motion. The swirl generating device can be arranged on a surface of the inner pipe or outer pipe, for example on the outer surface of the inner pipe or on the inner surface of the outer pipe, or can be a device arranged prior to the inlet of the nested pipe. The swirl generating device can be integrally formed on a surface of the nested pipe. Preferably, the swirl generating device is a vane. A vane is a flat or curved surface or object that is designed to guide the flow of the fluid. In the context of a swirl generating device, a vane is a component that is used to create swirling motion in a fluid flowing through the space between the inner pipe and outer pipe. In other words, the vane is designed, based on the configuration parameter, to impart a tangential velocity to the fluid, which creates a rotational flow pattern. The at least one configuration parameter of a swirl generating device can include various parameters related to the design of the vanes. Some examples of vane-related parameters that can affect the level of swirl generated in a fluid flowing through a pipe or duct include the height of a vane, which can affect the amount of tangential velocity imparted to the fluid. Higher vanes can create a stronger swirl but may also increase pressure drop in the pipe. The thickness of a vane can also impact the level of swirl generated. Thicker vanes may create a stronger swirl but may also reduce the flow area and increase pressure drop. The angle at which a vane is installed in the pipe can affect the direction and strength of the swirling motion. Such an angle is defined as the vane angle which is the angle between the vane and the axial direction of the pipe. Different angles can be used to achieve different levels of swirl. The shape of a vane can also impact the level of swirl generated. Straight vanes, helical vanes, and spiral vanes are all examples of vane shapes that can be used to create swirling motion. The vane shape can vary depending on the desired flow pattern. For example, a straight vane may create a uniform swirling motion, while a helical or spiral vane may create a more complex and turbulent flow pattern. The number of vanes used in a swirl generating device can also impact the level of swirl generated. More vanes can create a stronger swirl but may also increase pressure drop and flow resistance. The length of a vane can also affect the level of swirl generated. Longer vanes may create a stronger swirl but may also increase pressure drop and flow resistance. The design of the swirl generating device and its placement within the nested pipe will depend on the specific application and the desired level of swirl in the fluid. It is not necessary for the swirl generating device to extend along the entire length of the nested pipe. The swirl generating device can be designed to extend only along a portion of the inner pipe near the inlet or as a portion of the free-standing length of the inner pipe. Additionally, a plurality of swirl generating devices, such as vanes, can be arranged along the axial direction of the nested pipe to achieve the desired level of swirl. The distribution of the swirl generating devices along the length of the nested pipe can also vary depending on the specific application. For example, the devices may be arranged at regular intervals, or they may be concentrated in certain areas where the fluid flow requires more swirling, Intervals can be determined based on the decay of swirl downstream of one or more of such vanes. Based on this a swirl which is required to lift the inner pipe, can be maintained throughout the pipe with only few vanes actually being installed.It is important to note that a substantial portion of the nested pipe can be free of one or more swirl generating devices.

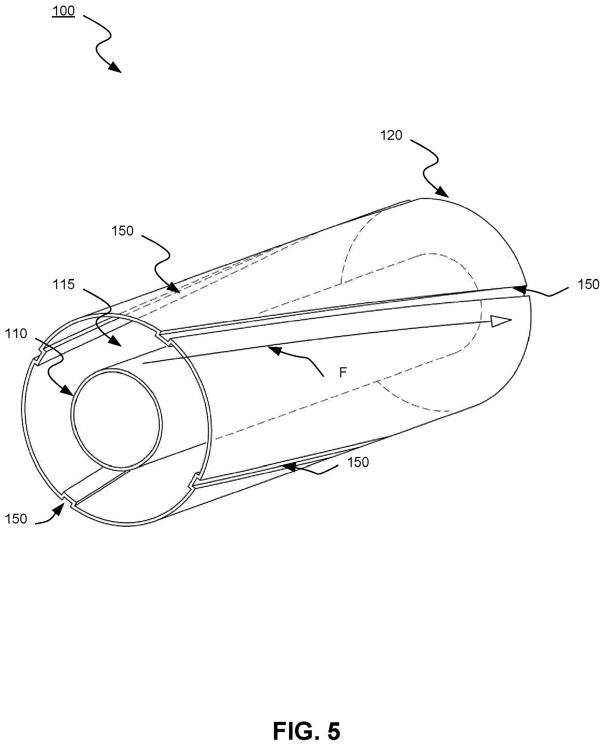

Figure 5 schematically illustrates a perspective view of a portion of a nested pipe 100 designed using the computer-implemented method described above. The nested pipe 100 comprise an inner pipe 110 nested within an outer pipe 120, with a gap 115 between the two pipes that allows fluid to circulate. On the inner surface of the outer pipe 120 three swirl generating devices 150 are arranged. The three swirl generating devices are shaped as vanes extending along a part of the nested pipe 100. The three vanes comprise a helical shape and are distributed along a circumference of, in this case, the outer pipe 120. The three vanes extend inwardly, from the inner surface of the outer pipe 120 towards the inner pipe 110. It is preferred that the swirl generating devices only partly extend from the inner or outer pipe towards the opposite pipe such that a portion of the space between the outer and the inner pipe is maintained between the swirl generating devices and the pipe opposite of said pipe. In other words, the swirl generating devices preferably do not extend over the entire space between the inner and the outer space. In this way, the outer pipe and the swirl generating devices arranged thereon, can generate a swirling motion F in the fluid passing through the space such that the swirling motion of the fluid stream F creates a force that acts in the direction opposite of where the inner pipe 110 is trying to move. The fluid stream F follows the direction of the swirl generating devices 150. It will be clear that similar swirl generating devices can be arranged on the inner pipe. Also, it is possible that both the inner and outer pipe comprise one or more swirl generating devices.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A computer-implemented method of determining at least one configuration parameter of a nested fluid transport pipe comprising at least an inner pipe nested in an outer pipe, wherein, in operation, a fluid stream passes through a space between the outer pipe and the inner pipe and through the inner pipe, the method comprising the following steps:
- receiving at least one design constraint of the nested pipe;
- performing a computational fluid dynamics simulation using the received at least one design constraint to determine a swirl number representative for a swirling motion of the fluid stream passed through the pipe,
wherein the computational fluid dynamics simulation is run under at least the condition that the swirling motion of the simulated fluid stream passed through the space between the outer pipe and the inner pipe and through the inner pipe substantially centres the inner pipe with respect to the outer pipe;
- determining the at least one configuration parameter of the nested pipe based on the determined swirl number such that a nested pipe comprising the determined at least one configuration parameter generates the simulated swirling motion in the nested pipe in operation.

2. The computer-implemented method according to the previous claim, wherein the design constraint is representative for at least one of a length of the nested pipe, a nominal diameter of the nested pipe and a weight of the inner pipe.

3. The computer-implemented method according to the previous claim, wherein the design constraint is further representative for at least one of a fluid flow velocity, a fluid viscosity, a heat transfer rate and a pressure drop.

4. The computer-implemented method according to any one of the previous claims, wherein determining the at least one configuration parameter of the nested pipe based on the determined swirl number comprises the step of designing a swirl generating device, wherein the swirl generating device comprises the at least one configuration parameter such that the swirl generating device, in operation, generates the swirling motion in the nested pipe.

5. The computer-implemented method according to the previous claim, wherein the swirl generating device is a vane arranged on at least one of an inner side of the outer pipe and an outer side of the inner pipe.

6. The computer-implemented method according to the previous claim, wherein the at least one configuration parameter is representative for at least one of a vane height, a vane thickness, a vane angle, a vane shape such as a straight vane, a helical vane, a spiral vane etc., a quantity of vanes and a vane length.

7. The computer-implemented method according to any one of the previous claims, wherein the simulated fluid stream passed through the space between the outer pipe and the inner pipe and the fluid passed through the inner pipe have an opposite flow direction or the same flow direction.

8. A nested fluid transport pipe comprising at least an inner pipe nested in an outer pipe, wherein, in operation, a fluid stream is passed through a space between the outer pipe and the inner pipe and through the inner pipe,
wherein the nested pipe comprises at least one configuration parameter determined according to any one of the previous claims such that, in operation, the nested pipe generates a swirling motion with the fluid stream passed through the nested pipe to substantially centre the inner pipe with respect to the outer pipe.

9. The nested pipe according to claim 8, further comprising a swirl generating device configured to generate the swirling motion in the nested pipe, wherein the swirl generating device is designed using the determined at least one configuration parameter of the nested pipe based on the determined swirl number.

10. The nested pipe according to claim 9, wherein the swirl generating device is configured to generate a swirl-induced force on the inner pipe using the fluid stream such that the inner pipe is centred with respect to the outer pipe.

11. The nested pipe according to any one of the claims 8-10, wherein the inner pipe is, in operation, substantially freely suspended in the outer pipe or at least freely suspended at one end.

12. The nested pipe according to any one of the claims 8-11, wherein the swirl generating device is a vane arranged on at least one of an inner side of the outer pipe and an outer side of the inner pipe.

13. The nested pipe according to any one of the claims 8-12, wherein, in operation, a longitudinal axis of the inner pipe lies within 15% of a central axis of the outer pipe, preferably within 10%, more preferably within 5%.

14. A geothermal energy system comprising a nested fluid circulation and/or geothermal heat extraction pipe according to any one of the claims 8-13.
